(19) Europäisches Patentamt
European Patent Office
Office européen des brevets

(11) **EP 2 440 596 B1**

(12) **EUROPÄISCHE PATENTSCHRIFT**

(45) Veröffentlichungstag und Bekanntmachung des Hinweises auf die Patenterteilung:
**11.12.2013 Patentblatt 2013/50**

(21) Anmeldenummer: **10723538.4**

(22) Anmeldetag: **02.06.2010**

(51) Int Cl.:
***C08G 18/42*** *(2006.01)*

(86) Internationale Anmeldenummer:
**PCT/EP2010/003359**

(87) Internationale Veröffentlichungsnummer:
**WO 2010/142399 (16.12.2010 Gazette 2010/50)**

(54) **VERFAHREN ZUR HERSTELLUNG VON POLYESTERPOLYOLEN MIT GERINGEN MENGEN AN DIOXANABFALL**

PROCESS FOR PRODUCING POLYESTER POLYOLS WITH LOW QUANTITIES OF DIOXAN WASTE

PROCÉDÉ POUR PRODUIRE DES POLYESTER-POLYOLS EN LIMITANT LES REJETS DE DIOXANE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **10.06.2009 DE 102009024479**

(43) Veröffentlichungstag der Anmeldung:
**18.04.2012 Patentblatt 2012/16**

(73) Patentinhaber: **Bayer Intellectual Property GmbH 40789 Monheim (DE)**

(72) Erfinder:
• **NEFZGER, Hartmut 50259 Pulheim (DE)**

• **BAUER, Erika 41363 Jüchen (DE)**
• **VAN DE BRAAK, Johannes 53773 Hennef (DE)**
• **KASPEREK, Silvia 50389 Wesseling (DE)**

(74) Vertreter: **BIP Patents c/o Bayer Intellectual Property GmbH Creative Campus Monheim Alfred-Nobel-Straße 10 40789 Monheim (DE)**

(56) Entgegenhaltungen:
**WO-A1-2010/015642    WO-A1-2010/051962 US-B1- 6 359 022**

**Beschreibung**

Die vorliegende Erfindung betrifft die Herstellung und Verwendung von Polyesterpolyolen aufgebaut aus wenigstens einem α,ω-Diol und einer aromatischen Dicarbonsäure oder Gemischen daraus oder deren Alkylester oder deren Anhydride und Diethylenglykol, wobei durch eine spezielle Reaktionsführung die Bildung von 1,4-Dioxan aus Diethylenglykol weitgehend unterdrückt wird.

Polyesterpolyole sind wichtiger Bestandteil vieler geschäumter und nicht geschäumter Polyurethansysteme. Polyesterpolyole, wie sie zur Bildung von Polyurethanen Verwendung finden, weisen ganz überwiegend Hydroxylendgruppen auf, die einer weiteren Reaktion mit Isocyanatgruppen zugänglich sind. Die Molmasse der Polyesterpolyole liegt typischerweise im Bereich von 200 - 5000 Dalton. Ihre Herstellung erfolgt hauptsächlich durch Polykondensation von Polycarbonsäuren, insbesondere Dicarbonsäuren, und Polyolen, insbesondere Diolen, dadurch dass unter entwässernden Bedingungen Carboxyl- und Hydroxylgruppen unter Bildung von Estergruppen zur Reaktion gebracht werden. Alternativ können auch Anhydride von Polycarbonsäuren, beispielsweise Phthalsäureanhydrid, oder innere Anhydride, also Lactone verwendet werden.

Entwässernde Bedingungen können beispielsweise durch das Anlegen von Vakuum, dem Ausblasen des Reaktionswassers mittels eines Inertgasstromes oder dem azeotropen Auskreisen mittels eines Schleppmittels erreicht werden (Houben-Weyl, Methoden der organischen Chemie, Band 14/2, Makromolekulare Stoffe, Thieme Verlag Stuttgart, Hrsg. E. Müller, S. 1 - 47, 1963).

Dem Fachmann ist bekannt, dass bei der Veresterung aromatischer Polycarbonsäuren, wie z.B. Terephthal-, Isophthal- oder Phthalsäure, meist eingesetzt in Form von Phthalsäureanhydrid, mit Diethylenglykol unerwünschterweise 1,4-Dioxan als Nebenprodukt entsteht. Das entstandene Dioxan wird bei der Produktion in technischen Anlagen zusammen mit dem Reaktionswasser ausgetragen und muss danach beispielsweise in Kläranlagen abgebaut werden oder nach Aufkonzentrierung verbrannt werden. Durch diesen zusätzlichen Verfahrensschritt erhöhen sich die Kosten der Polyesterpolyol-Produktion.

Das als Nebenprodukt entstehende 1,4-Dioxan führt auch dazu, dass die Ausbeute an gewünschtem Produkt vermindert wird, da ein Teil des eingesetzten Diethylenglykols nicht in den dargestellten Polyester eingebaut wird, sondern.wie beschrieben in Form von 1,4-Dioxan an dem Reaktionsgemisch entfernt wird. Daher ergibt sich aus der Bildung von 1,4-Dioxan ein gravierender wirtschaftlicher Nachteil.

Weiterhin kann die Menge an 1,4-Dioxan, die von einer Produktionsanlage hergestellt werden darf, durch Konzessionsvorgaben begrenzt sein. Die Begrenzung der Menge an Dioxan führt damit in diesen Fällen indirekt zur Begrenzung der Produktionskapazität einer Anlage zur Herstellung von Polyesterpolyolen.

Eine Aufgabe der vorliegenden Erfindung ist es daher, ein Verfahren zur Herstellung von Polyesterpolyen, aufgebaut aus wenigstens einem α,ω-Diol und Terephthal- und/oder Isophthalsäure und Diethylenglykol zur Verfügung zu stellen, das die Nachteile aus dem Stand der Technik überwindet.

Insbesondere ist es eine Aufgabe der vorliegenden Erfindung bei der Herstellung von Polyesterpolyolen aus wenigstens einem α,ω-Diol und Terephthal- und/oder Isophthalsäure und Diethylenglykol die Menge an entstehendem Dioxan im Bezug auf die Menge an eingesetztem Diethylenglykol zu begrenzen. Dabei lässt sich die Menge an Dioxan auf unter 20 g pro kg, bevorzugt auf unter 10 g pro kg eingesetztem Diethylenglykol begrenzen.

Eine weitere Aufgabe der vorliegenden Erfindung ist es bei der Herstellung von Polyesterpolyolen aus wenigstens einem α,ω-Diol und Terephthal- und/oder Isophthalsäure und Diethylenglykol die Menge an entstehendem Dioxan im Bezug auf die Menge des gebildeten Polyesterpolyols zu reduzieren. Dabei lässt sich die Menge an Dioxan auf unter 4 g pro kg, bevorzugt auf unter 3 g pro kg gebildetem Polyesterpolyol begrenzen.

Die vorstehend genannte Aufgabe wird durch das erfindungsgemäße Verfahren gelöst.

Die Erfindung betrifft ein Verfahren gemäß Anspruch 1 zur Herstellung von Polyesterpolyolen, wobei in einem Schritt

a) wenigstens eine aromatische Dicarbonsäure oder ein Alkylester einer aromatischen Dicarbonsäure oder ein Anhydrid einer aromatischen Dicarbonsäure (A) und wenigstens ein bestimmtes α,ω-Diol (B) vermischt werden, wobei das Molverhältnis der Komponenten (B) zu (A) im Bereich von 20 zu 1 bis 1,05 zu 1 liegt und der Gewichtsanteil der Komponenten (A) und (B) in der Summe bezogen auf das Gewicht der in Schritt c) erhaltenen Mischung im Bereich zwischen 55 bis 99 Gew.- % liegt, wobei sich ein Polyesterpolyol bildet, und

b) zu dem in Schritt a) erhaltenen Polyesterpolyol Phthalsäureanhydrid (C) im Molverhältnis der Komponenten (C) zu der im Schritt a) zugegebenen wenigstens einen aromatischen Dicarbonsäure oder dem Alkylester der aromatischen Dicarbonsäure oder dem Anhydrid einer aromatischen Dicarbonsäure (A) im Bereich von 0 zu 1 bis 2 zu 1, bevorzugt 0,1 zu 1 bis 1,5 zu 1, zugegeben wird, wobei sich ein Polyesterpolyol bildet, und

c) zu dem in Schritt b) erhaltenen Polyesterpolyol Diethylenglykol (D) im Gewichtsanteil von 1 bis 35 Gew.-%,

bezogen auf das Gewicht der Mischung, zugesetzt wird, wobei sich ein Polyesterpolyol bildet,

wobei das in Schritt b) erhaltene Polyesterpolyol eine höhere Molmasse als das in Schritt c) erhaltene Polyesterpolyol aufweist.

Selbstverständlich kann der Schritt b) entfallen für den Fall, dass das Molverhältnis der Komponenten (C) zu der im Schritt a) zugegebenen wenigstens einen aromatischen Dicarbonsäure (A) den Wert 0 annimmt.

Die im Schritt a) zu 100 Gew.-%, bezogen auf das Gewicht der in Schritt c) erhaltenen Mischung, fehlenden Komponenten können in den Schritten b) und/oder c) zugegeben werden, können jedoch auch als weitere Komponente (E) neben den Komponenten (A), (B), (C) oder (D) in den Schritten a) und/oder b) und/oder c) zugesetzt werden. Die in Schritt c) erhaltene Mischung, die die in den Schritten a) - c) zugegebenen Komponenten bzw. deren Umsetzungsprodukte enthält, ist somit die Basis für die Gewichtsangaben. Bevorzugt handelt es sich bei diesen weiteren Komponenten (E) um niedermolekulare Polyole, beispielsweise um 1,1,1-Trimethylolpropan, Pentaerythrit, oder Gylcerin, bzw. um verzweigte Polyether und/oder Polyesterpolyole mit zahlenmittleren Funktionalitäten größer 2. Bevorzugt werden diese weiteren Komponenten (E) im Schritt a) zugesetzt.

Die Carbonsäuren (A) sind aromatisch und es handelt sich um wenigstens eine der isomeren Phthalsäuren, also Phthalsäure, Isophthalsäure oder Terephthalsäure oder Gemische daraus. Anstelle der aromatischen Carbonsäuren oder im Gemisch mit den aromatischen Carbonsäuren können auch deren Alkylester oder Anhydride, insbesondere Phthalsäureanhydrid, eingesetzt werden. Bevorzugt handelt es sich bei den Alkylestern um Diester, bei denen beide Carboxylgruppen verestert sind. Dabei können die beiden Estergruppen gleich oder unterschiedlich sein. Alkyl bedeutet dabei bevorzugt $C_1$ - $C_{20}$-Alkyl, besonders bevorzugt Methyl, Ethyl, Propyl, n-Butyl, iso-Butyl, Pentyl mit seinen Isomeren, Hexyl mit seinen Isomeren, Heptyl mit seinen Isomeren, Octyl mit seinen Isomeren, Nonyl mit seinen Isomeren, Decyl mit seinen Isomeren sowie $C_{11}$, $C_{12}$, $C_{13}$, $C_{14}$, $C_{15}$, $C_{16}$, $C_{17}$, $C_{18}$, $C_{19}$, $C_{20}$, jeweils mit ihren Isomeren.

Bevorzugt wird die aromatische Dicarbonsäure (A) ausgewählt aus der Gruppe bestehend aus Terephthalsäure und Isophthalsäure: Ganz besonders bevorzugt ist die aromatische Dicarbonsäure Terephthalsäure, einschließlich deren Dialkylester, wobei dann an Stelle von Wasser Alkylalkohol als Kondensationsprodukt gebildet wird.

Als $\alpha,\omega$-Diole (B) kommen Ethylenglykol, Triethylenglykol, Tetraethylenglykol, Pentaethylenglykol, sowie deren höhere Homologe mit zahlenmittleren Molmassen von 150 bis 410 g/mol in Frage.

Erfindungsgemäß erfolgt die Zugabe des Diethylenglykols (D) in Schritt c) und die Äquilibrierung ins Polyestergleichgewicht so, dass die Verteilung der einzelnen Oligomeren des Polyesterpolyols der Flory-Oligomeren-Verteilungsfunktion entspricht (P.J.Flory, Principles of Polymer-Chemistry, Cornell University Press, Ithaca 1953, Seite 317 fortfolgende). Im Flory-Gleichgewicht befindliche Polyesterpolyole eines vorgegebenen Typs weisen immer die gleiche Oligomeren-Verteilung auf und ergeben somit konsistente Materialeigenschaften im Bezug auf die daraus hergestellten Polyurethan-Werkstoffe.

Die Zugabe des Diethylenglykols (D) erfolgt im Schritt c) bei beliebiger Temperatur sowohl des aus Schritt b), oder ggf. aus Schritt a) erhaltenen Polyesterpolyols als auch des zuzusetzenden Diethylenglykols. Vorzugsweise weist das nachzusetzende Diethylenglykol eine Temperatur von Raumtemperatur (20°C) bis 60°C auf, das Polyesterpolyol aus Schritt b), oder ggf. aus Schritt a), eine erhöhte Temperatur von 120 bis 200°C. Das Diethylenglykol (D) wird unter Laborbedingungen im Stickstoffgegenstrom zugegeben, unter technischen Bedingungen vorzugsweise durch Anlegen von Vakuum in den Kessel eingezogen.

Bei Verwendung gleicher Mengen an gleichen Einsatzstoffen unterscheiden sich die Eigenschaften der erfindungsgemäß hergestellten Polyesterpolyole von nicht erfindungsgemäß hergestellten Polyesterpolyolen nicht nur bezüglich der Ausbeuten, sondern auch bezüglich ihrer Eigenschaften. Unter diesen Voraussetzungen ist beispielsweise die Hydroxylzahl erfindungsgemäßer Polyesterpolyole größer bzw. deren Molmasse kleiner als die der nicht nach dem erfindungsgemäßen Verfahren hergestellten. Entsprechendes gilt auch für daraus hergestelltes Polyurethan (PUR). Dies ist Folge des im nicht erfindungsgemäßen Fall aus Diethylenglykol gebildeten Dioxans.

Selbstverständlich kann im nicht erfindungsgemäßen Fall der teilweise Verlust an Diethylenglykol ausgeglichen werden, indem man die als Dioxan verlorene Menge an Diethylenglykol im Vorhinein oder durch entsprechenden Nachsatz ausgleicht. In diesem Fall werden ähnliche Polyesterpolyole erhalten; allerdings unterscheiden sich die Rezepturen dann dadurch, dass dann die zur Synthese einer gegebenen Menge an Polyesterpolyol mit gleicher Bruttozusammensetzung erforderlichen Menge an Einsatzstoffen, insbesondere an Diethylenglykol, im nicht erfindungsgemäßen Verfahren nachteiligerweise erhöht ist.

Die zuzugebenden Menge an Diethylenglykol (D) wird durch die OH-Zahl des Produktes aus Schritt b), oder ggf. aus Schritt a) und die OH-Zahl des angestrebten Endproduktes sowie aus der Ansatzgröße nach folgender Formel bestimmt:

$$\text{Zugabe Diethylenglykol (D) in g} = (Z - Y) * M / (1058 - Z)$$

mit.

| Ziel OH-Zahl nach Schritt c) | Z |
| gefundene OH-Zahl aus Schritt b), oder ggf. aus Schritt a), | Y |
| Polyestermenge aus Schritt b), oder ggf. aus Schritt a), in g | M |
| OH-Zahl Diethylenglykol | 1058 |

Der Nachsatz an Diethylenglykol (D) kann sowohl über einen längeren Zeitraum, z.B. über 1 bis 5 Stunden verteilt, kontinuierlich, gleichmäßig oder ungleichmäßig oder in einem Schuss erfolgen.

Bevorzugt liegt das Molverhältnis der Komponenten (B) zu (A) im Bereich von 1,1 zu 1,0 bis 10,0 zu 1,0.

Bevorzugt liegt die OH-Zahl des aus Schritt a) erhaltenen Polyesterpolyols im Bereich zwischen 28 und 560 KOH/kg, bevorzugt im Bereich zwischen 37 und 450 KOH/kg.

Bevorzugt liegt die Molmasse des aus Schritt a) erhaltenen Polyesterpolyols im Bereich zwischen 4000 und 200, bevorzugt im Bereich zwischen 3000 und 250, g/mol.

Bevorzugt liegt die OH-Zahl des aus Schritt b) erhaltenen Polyesterpolyols im Bereich zwischen 25 - 190 g KOH/kg, bevorzugt im Bereich zwischen 28 - 160 g KOH/kg.

Bevorzugt liegt die Molmasse des aus Schritt b) erhaltenen Polyesterpolyols im Bereich zwischen 4500 und 600, bevorzugt im Bereich zwischen 4000 und 700 g/mol.

Bevorzugt liegt die Viskosität des aus Schritt b) erhaltenen Polyesterpolyols bei einer Temperatur von 25°C im Bereich zwischen 400 und 20000 mPas, bevorzugt im Bereich zwischen 450 und 15000 mPas.

Bevorzugt beträgt der Gewichtsanteil der Komponenten (A) und (B) in Schritt a) in der Summe bezogen auf das Gewicht der Mischung im Bereich zwischen 60 und 90 Gew.-%.

Bevorzugt wird in Schritt b) zu dem in Schritt a) erhaltenen Polyesterpolyol Phthalsäureanhydrid (C) im Molverhältnis der Komponenten (C) zu der im Schritt a) zugegebenen wenigstens einen aromatischen Dicarbonsäure (A) im Bereich von 0 zu 1 bis 1,5 zu 1 zugegeben.

Die OH-Zahl wird bestimmt, indem in einer Probe des Polyesterpolyols die Hydroxylendgruppen zunächst mit einem definierten Überschuss eines Anhydrids, z.B. Essigsäureanhydrid zur Umsetzung gebracht werden, das überschüssige Anhydrid hydrolysiert und der Gehalt an freien Carboxylgruppen durch direkte Titration mit einer starken Base, z.B. Natriumhydroxid, ermittelt wird. Die Differenz von in Form des Anhydrids eingebrachten Carboxylgruppen und den experimentell gefundenen Carboxylgruppen ist ein Maß für die Anzahl an Hydroxylgruppen der Probe. Sofern dieser Wert um die Anzahl der in der ursprünglichen Probe infolge nicht ganz vollständiger Veresterung enthaltenen Carboxylgruppen korrigiert wird, d.h. um die Säurezahl, wird die OH-Zahl erhalten. Die meist mit Natriumhydroxid durchgeführten Titrationen werden dabei in die äquivalente Menge Kaliumhydroxid umgerechnet, so dass Säure- und Hydroxylzahlen die Dimension g KOH/kg aufweisen. Zwischen Hydroxylzahl (OH#) und zahlenmittlerem Molekulargewicht (M) besteht dabei folgender rechnerischer Zusammenhang: $M = (56100 * F) / OH\#$. F bedeutet hierbei die zahlenmittlere Funktionalität und kann aus der Rezeptur in guter Nährung abgeleitet werden.

Die Viskosität wird mit Hilfe eines Kegel-Platte-Viskosimeters, z.B. Physica MCR 51 der Fa. Anton Paar, bestimmt, wobei auf Scherrate Null extrapoliert wird: Erfindungsgemäße Polyole sind weitestgehend nicht strukturviskos.

Die aus Schritt c) erhaltenen Polyesterpolyole weisen bevorzugt Säurezahlen im Bereich von 0,5 bis 3,5 auf.

Vorzugsweise wird ein Vakuumverfahren zur Herstellung der erfindungsgemäßen Polyesterpolyole bei absoluten Drücken im Bereich von 1,1 bar bis 5 mbar, besonders bevorzugt 1,0 bar bis 10 mbar, und Temperaturen im Bereich von 100 - 250, bevorzugt 180 bis 240 °C durchgerührt.

Vorzugsweise wird das Verfahren zur Herstellung der erfindungsgemäßen Polyesterpolyole durch-geführt, indem die Komponenten (B) des Schrittes a) vorgelegt, die Komponeten (A) unter Rühren zugegeben werden und zunächst und bevorzugt bei absoluten Drücken von 1,0 bis 1,1 bar unter Verwendung eines Schutzgases bei Temperaturen im Bereich von 100 bis 240 °C, besonders bevorzugt bei Temperaturen im Bereich von 180 bis 240 °C, solange kondensiert wird bis Phthalsäure, Phthalsäureanhydrid, Terephthalsäure und/oder Isophthalsäure und / oder deren Alkylester klar gelöst sind. Bevorzugt wird anschließend, gegebenenfalls nach Zusatz eines Veresterungskatalysators, der absolute Druck im Verlauf von 1 bis 4 Stunden auf unterhalb von 100 mbar vermindert und schließlich bei Temperaturen im Bereich von 180 bis 240 °C und absoluten Drücken im Bereich von bevorzugt 10 bis 100 mbar polykondensiert, bis eine Säurezahl von unter 5 g KOH/kg erhalten wird.

Zur Herstellung der erfindungsgemäßen Polyesterpolyole können alle dem Fachmann bekannten Katalysatoren verwendet werden. Bevorzugt werden Zinn-(II)-chlorid und Titan-tetraalkoxylate verwendet.

Die Umsetzung der Komponenten zur Herstellung des erfindungsgemäßen Polyesterpolyols erfolgt vorzugsweise in Substanz.

Alternativ können die Polyesterpolyole auch durch das Stickstoffblasverfahren hergestellt werden, bei dem das Kondensat durch einen Stickstoffstrom aus dem Reaktionsgefäß ausgetragen wird (J.H. Saunders und H.T. Frisch in Polyurethanes: Chemistry and Technology, Part I. Chemistry, Interscience published John Wiley and Sons, New York 1962, Seite 45).

Die Erfindung betrifft auch die nach dem erfindungsgemäßen Verfahren erhältlichen Polyesterpolyole.

Die nach dem erfindungsgemäßen Verfahren hergestellten Polyesterpolyole werden bevorzugt eingesetzt zur Herstellung von Polyurethanen. Polyurethan ist ein vielseitiger Werkstoff, der in vielen Bereichen Anwendung findet. Auf Grund der großen Vielfalt der verwendbaren Rohstoffe können Produkte mit den unterschiedlichsten Eigenschaften hergestellt werden, beispielsweise Hartschäume zur Dämmung, Blockweichschäume für Matratzen, Formweichschäume für Autositze und Sitzkissen, Akustikschäume zur Schalldämmung, thermoplastische Schäume, Schuhschäume oder mikrozelluläre Schäume, aber auch kompakte Giesssysteme und thermoplastische Polyurethane.

Ein weiterer Gegenstand der vorliegenden Erfindung ist ein Verfahren zur Herstellung eines Polyurethan-Schaumstoffs, der ggf. Polyisocyanuratgruppen enthalten kann, (PUR-PIR-Schaumstoff), bei dem

a) Polyesterpolyol nach dem erfindungsgemäßen Verfahren hergestellt wird und das so erhaltene Polyesterpolyol anschließend

b) mit wenigstens einer polyisocyanathaltigen Komponente,

c) in Gegenwart eines oder mehrerer Treibmittel,

d) in Gegenwart eines oder mehrerer Katalysatoren und

e) ggf. in Gegenwart eines oder mehrerer Flammschutzmittel und ggf. in Gegenwart weiterer Hilfs- und Zusatzstoffe und

f) ggf. mit wenigstens einer Verbindung mit mindestens zwei gegenüber Isocyanaten reaktiven Gruppen, die sich von dem Polyesterpolyol aus Schritt a) unterscheidet, umgesetzt wird.

Die Erfindung betrifft auch die nach dem erfindungsgemäßen Verfahren erhältlichen PUR-PIR-Schaumstoffe.

Als polyisocyanathaltige Komponente kommen die üblichen aliphatischen, cycloaliphatischen und insbesondere aromatischen Di- und/oder Polyisocyanate in Frage. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI). Die Isocyanate können auch modifiziert sein, beispielsweise durch Einbau von Uretdion-, Carbamat-, Isocyanurat-, Carbodiimid-, Allophanat- und insbesondere-Urethangruppen. Zur Herstellung von Polyurethan-Hartschaumstoffen wird insbesondere Polymer-MDI eingesetzt. Die Isocyanurat-Bildung erfolgt im Stand der Technik praktisch ausschließlich während der Verschäumungsreaktion und führt zu flammwidrigen PUR/PIR-Schaumstoffen, welche bevorzugt im technischen Hartschaum, beispielsweise im Bauwesen als Dämmplatte, Sandwichelemente, Rohrisolierungen und LKW Aufbauten eingesetzt werden.

Als Verbindungen mit mindestens zwei gegenüber Isocyanat reaktiven Gruppen, das heißt mit mindestens zwei mit Isocyanatgruppen reaktiven Wasserstoffatomen können allgemein Verbindungen eingesetzt werden, die nachfolgend allgemein beschrieben werden.

Als Verbindungen mit mindestens zwei gegenüber Isocyanat reaktiven Gruppen kommen insbesondere solche in Frage, die zwei oder mehrere reaktive Gruppen, ausgewählt aus OH-Gruppen, SH-Gruppen, NH-Gruppen, $NH_2$-Gruppen und CH-aciden Gruppen, wie z.B. $\beta$-Diketo-Gruppen, im Molekül tragen. Zur Herstellung der nach dem erfindungsgemässen Verfahren bevorzugt hergestellten Polyurethanhartschaumstoffe kommen insbesondere Verbindungen mit 2 bis 8 OH-Gruppen zum Einsatz. Vorzugsweise eingesetzt werden Polyetherpolyole und/oder Polyesterpolyole. Die Hydroxylzahl der verwendeten Polyetherpolyole und/oder Polyesterpolyole beträgt bei der Herstellung von Polyurethanhartschaumstoffen vorzugsweise 25 bis 850 mg KOH/g, besonders bevorzugt 25 bis 550 mg KOH/g, die Molekulargewichte sind vorzugsweise größer als 300 g/mol. Bevorzugt enthält die Komponente (f) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Weiterhin kann die Herstellung der Polyetherpolyole mittels Doppelmetallcyanidkatalyse erfolgen, wobei hier auch eine kontinuierliche Fahrweise möglich ist.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht Glycerin, Trimethylolpropan, Pentaerythrit, Sacharose, Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3-Propandiamin, 1,6-Hexandiamin, Ethanolamin, Diethanolamin, Triethanolamin sowie andere zwei oder mehrwertige Alkohole, die ihrerseits auch Oligoetherpolyole sein können oder ein- oder mehrwertige Amine, sowie Wasser.

Ferner kann die Komponente (f) optional Polyesterpolyole, Kettenverlängerungs- und/oder Vernetzungsmitteln enthalten. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400 g/mol, vorzugsweise von 60 bis 300, zum Einsatz. Bevorzugt setzt man als Verbindung (f) Polyetherpolyole und/oder Polyesterpolyole mit einer Hydroxylzahl grösser 160, besonders bevorzugt grösser 200 mg KOH/g und besonders bevorzugt einer Funktionalität zwischen 2,9 und 8 ein. Besonders bevorzugt setzt man als gegenüber Isocyanaten reaktive Verbindungen (f) Polyetherpolyole ein, die ein Äquivalentgewicht, d.h. Molekulargewicht dividiert durch die Funktionalität, kleiner 400 g/mol, bevorzugt kleiner 200 g/mol aufweisen. Die Verbindung (f) liegt im Allgemeinen in flüssiger Form vor.

Als Treibmittelkomponente (c) werden bevorzugt Kohlenwasserstoffe eingesetzt. Diese können im Gemisch mit Wasser und/oder weiteren physikalischen Treibmitteln eingesetzt werden. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale.

Die Treibmittelkomponente (c) setzt man bevorzugt in einer Menge von 2 bis 45 Gew.-%, bevorzugt 3 bis 30 Gew.-%, besonders bevorzugt 4 bis 20 Gew.-%, bezogen auf das Gesamtgewicht der Komponenten (b) bis (f) ein. In einer bevorzugten Ausführungsform enthält das Treibmittelgemisch (c) Kohlenwasserstoffe, insbesondere n-Pentan und/oder Cyclopentan und Wasser. Besonders bevorzugte Kohlenwasserstoffe sind n-Pentan, Cyclopentan, iso-Pentan und/oder Mischungen der Isomeren. Insbesondere werden Cyclopentan und/oder n-Pentan als Treibmittel (c) verwendet.

Als Katalysatoren (d) für die Herstellung der erfindungsgemäßen Polyurethan- bzw. Polyisocyanurat-Schaumstoffe werden die üblichen und bekannten Polyurethan- bzw. Polyisocyanuratbildungskatalysatoren eingesetzt, beispielsweise organische Zinnverbindungen, wie Zinndiacetat, Zinndioctoat, Dibutylzinndilaurat und/oder stark basische Amine wie 2,2,2-Diazabicyclooctan, Triethylamin oder vorzugsweise Triethylendiamin, N,N-Dimethylcyclohexylamin oder Bis(N,N-Dimethylaminoethyl)ether, sowie zur Katalyse der PIR-Reaktion Kaliumacetat, Kaliumoctoat und aliphatische quaternäre Ammoniumsalze.

Die Katalysatoren werden vorzugsweise in einer Menge von 0,05 bis 3 Gew.-%, vorzugsweise 0,06 bis 2 Gew.-%, bezogen auf das Gesamtgewicht aller Komponenten eingesetzt.

Die Umsetzung der vorstehend genannten Komponenten erfolgt gegebenenfalls in Anwesenheit von (e) Zusatzstoffen, wie z.B. Flammschutzmittel, Füllstoffen, Zellreglern, Schaumstabilisatoren, oberflächenaktiven Verbindungen und/oder Stabilisatoren gegen oxidativen, thermischen oder mikrobiellen Abbau oder Alterung, bevorzugt Flammschutzmittel und/oder Schaumstabilisatoren. Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol A. Als Alkoxylierungsreagenzien können beispielsweise Ethylenoxid, Propylenoxid, Poly-THF sowie hoehere Homologe verwendet werden.

Als Flammschutzmittel können im Allgemeinen die aus dem Stand der Technik bekannten Flammschutzmittel verwendet werden. Geeignete Flammschutzmittel sind beispielsweise bromierte Ether (z.B. Ixol® B251), bromierte Alkohole wie Dibromneopentylalkohol, Tribromneopentylalkohol und PHT-4-Diol sowie chlorierte Phosphate wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, roten Phosphor enthaltende Zubereitungen, Aluminiumoxidhydrat, Antimontrioxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PUR- bzw. PUR-/PIR-Hartschaumstoffe verwendet werden. Als weitere flüssige halogenfreie Flammschutzmittel können Diethylethanphosphonat (DEEP), Triethylphosphat (TEP), Dimethylpropylphosphonat (DMPP), Diphenylkresylphosphat (DPK) und andere verwendet werden. Die Flammschutzmittel werden im Rahmen der vorliegenden Erfindung bevorzugt in einer Menge von 0 bis 30 Gew.-%, besonders bevorzugt von 2 bis 25 Gew.-%, insbesondere von 2,5 bis 15 Gew.-%, bezogen auf das Gesamtgewicht der Komponenten (b) bis (e) verwendet.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Zur Herstellung der Polyurethan-Hartschaumstoffe werden die Polyisocyanate (b) und die Komponenten (a) und ggf. (f) in solchen Mengen zur Umsetzung gebracht, dass die Isocyanat-Kennzahl des Schaumes 90 bis 600, bevorzugt 150 bis 500, besonders bevorzugt 180 bis 450 beträgt.

Die Polyurethan-Hartschaumstoffe können diskontinuierlich oder kontinuierlich mit Hilfe bekannter Verfahren hergestellt werden. Dem Fachmann bekannt sind u.a. die Blockschaumherstellung (kontinuierlich und diskontinuierlich), die Verwendung in Einkomponentensystemen (diskontinuierlich) und im Isolierformschaum (diskontinuierlich). Die hier beschriebene Erfindung bezieht sich auf alle Verfahren, vorzugsweise jedoch auf das kontinuierliche Doppelbandverfahren, wobei als Deckschichten flexible und/oder starre Materialien verwendet werden können.

Die erfindungsgemässen Polyurethanhartschaumstoffe weisen bevorzugt eine Geschlossenzelligkeit grösser 90 %, besonders bevorzugt größer 95% auf.

Bevorzugt weisen die erfindungsgemäßen PUR-, bzw. PUR-/PIR-Schäume eine Dichte von 28 g/m$^3$ bis 300 g/m$^3$, besonders bevorzugt von 30 g/m$^3$ bis 50 g/m$^3$ auf.

Der Einsatz der efindungsgemässen Polyurethanhartschaumstoffen erfolgt insbesondere zur Wärmedämmung, beispielsweise von Kühlgeräten, Behältern oder Gebäuden, z.B. in Form von gedämmten Rohren, Sandwichelementen, Dämmplatten oder Kühlgeräten.

Als Polyurethane im Sinne der vorliegenden Patentanmeldung werden auch polymere Isocyanataddukte verstanden, die neben Urethangruppen noch weitere Gruppen enthalten, wie sie beispielsweise durch Reaktion der Isocyanatgruppe mit sich selbst entstehen, beispielsweise Isocyanuratgruppen, oder die durch Reaktion der Isocyanatgruppen mit anderen Gruppen als mit Hydroxylgruppen entstehen, wobei die genannten Gruppen meist gemeinsam mit den Urethangruppen im Polymer vorliegen.

Ein weiterer Gegenstand der vorliegenden Erfindung ist die Verwendung von Polyesterpolyolen, die nach dem vorstehend beschriebenen Verfahren hergestellt werden, zur Herstellung von Polyurethan. Polyurethan ist ein vielseitiger Werkstoff, der in vielen Bereichen Anwendung findet. Auf Grund der großen Vielfalt der verwendbaren Rohstoffe können Produkte mit den unterschiedlichsten Eigenschaften hergestellt werden, beispielsweise Hartschäume zur Dämmung, Blockweichschäume für Matratzen, Formweichschäume für Autositze und Sitzkissen, Akustikschäume zur Schalldämmung, thermoplastische Schäume, Schuhschäume oder mikrozelluläre Schäume, aber auch kompakte Giesssysteme und thermoplastische Polyurethane.

Im Folgenden wird die Erfindung anhand von Beispielen verdeutlicht.

**Beispiele:**

**Zusammenstellung der in den Beispielen verwendeten Rohstoffe**

| | |
|---|---|
| Terephthalsäure | Interquisa |
| Phthalsäureanhydrid (PSA): | Technisches PSA der Fa. Lanxess |
| Diethylenglykol (DEG): | DEG der Fa. Ineos |
| Zinn-II-Chlorid-dihydrat | der Fa. Aldrich |
| Polyethylenglykol (PEG 200) | PEG 200 der Fa. Ineos. |

**Verwendete Geräte und Analysenmethoden:**

| | |
|---|---|
| Viskosimeter: | MCR 51 der Fa. Anton Paar |
| Hydroxylzahl: | anhand der Norm DIN 53240 |
| Säurezahl: | anhand der Norm DIN 53402 |

**Herstellung der Polyesterpolyole**

**Beispiel A-1 (erfindungsgemäß):**

In einem 4-Liter 4-Halskolben, ausgestattet mit Heizpilz, mechanischem Rührwerk, Innenthermometer, 40 cm-Füllkörper-Kolonne, Kolonnenkopf, absteigendem Intensivkühler und Trockeneis gekühlter Vorlage, sowie Membranvakuumpumpe wurden unter Stickstoffüberschleierung bei 140°C 2134 g (10,67 Mol) PEG 200 vorgelegt, 1106 g (6,66 Mol) Terephthalsäure eingerührt und 78 mg Zinn-II-Chlorid-dihydrat zugegeben. Man erhöhte die Reaktionstemperatur auf 230 °C und rührte bei Normaldruck für 22 Stunden, wobei sich dioxanfreies Reaktionswasser abschied. Man gab weitere 78 mg Zinn-II-Chlorid-dihydrat zu, verringerte den Druck im Verlauf von 3 Stunden auf 30 mbar und vervollständigte die Reaktion für weitere 17 Stunden. Man bestimmte Säure- und Hydroxylzahl zu 0,2 bzw. 130 mg KOH/g und setzte 403 (3,8 Mol) Diethylenglykol nach und rührte  für 5 Stunden bei 200 °C bei Normaldruck unter Stickstoffüberschleierung nach, wobei kein Reaktionswasser mehr abgeschieden wurde.

**Analyse des Polyesterpolyols:**

Hydroxylzahl: 243,8 mg KOH/g

Säurezahl: 0,2 mg KOH/g

Viskosität: 1210 mPas (25°C)

Man bestimmte die Menge an entstandenem 1,4-Dioxan im Reaktionswasser gaschromatographisch zu 0 Gew.-% und im entstandenen Polyester zu 0,1 Gew.-%

**Beispiel A-2 (erfindungsgemäß)**

Verfahrensweise wie in A-1 beschrieben; Einsatzmengen siehe Tabelle 1.

**Beispiel A-3 (erfindungsgemäß)**

In einer Reaktionsapparatur nach Bspl. A-1 wurden unter Stickstoffüberschleierung bei 140°C 2134 g (10,67 Mol) PEG 200 vorgelegt, 553 g (3,33 Mol) Terephthalsäure eingerührt und 78 mg Zinn-II-Chlorid-dihydrat zugegeben. Man erhöhte die Reaktionstemperatur auf 230 °C und rührte bei Normaldruck für 4 Stunden, wobei sich dioxanfreies Reaktionswasser abschied. Man verringerte die Temperatur auf 180 °C, gab 493 g (3,33 Mol) PSA zu führte die Reaktion unter Normaldruck für weitere 3 Stunden weiter. Man gab weitere 78 mg Zinn-II-Chlorid-dihydrat zu, verringerte den Druck im Verlauf von 3 Stunden auf 30 mbar und vervollständigte die Reaktion für weitere 15 Stunden. Man bestimmte Säure- und Hydroxylzahl zu 0,9 bzw. 133,1 mg KOH/g und setzte 395 (3,73 Mol) Diethylenglykol nach und rührte für 5 Stunden bei 200 °C bei Normaldruck unter Stickstoffüberschleierung nach, wobei kein Reaktionswasser mehr abgeschieden wurde.

**Analyse des Polyesterpolyols**:

Hydroxylzahl: 242,9 mg KOH/g

Säurezahl: 0,7 mg KOH/g

Viskosität: 1300 mPas (25°C)

Man bestimmte die Menge an entstandenem 1,4-Dioxan im Reaktionswasser gaschromatographisch zu 0 Gew.-% und im entstandenen Polyester zu 0,1 Gew.-%

**Beispiel A-4 (erfindungsgemäß)**

Verfahrensweise wie in A-3 beschrieben; Einsatzmengen siehe Tabelle 1.

**Tabelle 1:** Beispiele A-1 bis A-4. Als Katalysator wurden jeweils 50 ppm Zinn-II-chlorid-di hydrat verwendet.

| Beispiel | | A-1 | A-2 | A-3 | A-4 |
|---|---|---|---|---|---|
| Stufe 1 | | | | | |
| PEG 200 | [mol] | 10,67 | 10,67 | 10,67 | 10,67 |
| | [g] | 2134 | 2134 | 2134 | 2134 |
| Terephthalsäure | [mol] | 6,66 | 6,66 | 3,33 | 3,33 |
| | [g] | 1106 | 1106 | 553 | 553 |
| Stufe 2 | | | | | |
| Phthalsäureanhydrid | [mol] | | | 3,33 | 3,33 |
| | [g] | | | 493 | 493 |
| Stufe 3 | | | | | |
| Diethylenglykol | [mol] | 3,80 | 2,39 | 3,73 | 2,20 |
| | [g] | 403 | 253 | 395 | 233 |
| | | | | | |
| Hydroxylzahl | [mg KOH/g] | 243,8 | 205,7 | 242,9 | 202,5 |
| Säurezahl | [mg KOH/g] | 0,2 | 0,2 | 0,7 | 0,6 |
| Max. Reaktionstemperatur | [°C] | 230 | 230 | 230 | 230 |
| Laufzeit | [Std] | 48 | 48 | 30 | 30 |
| Dioxan, gefunden | [g] | 0,34 | 0,34 | 0,34 | 0,32 |
| Masse Ester, theoret. | [g] | 3403 | 3253 | 3395 | 3232 |
| Masse Ester, ohne Dioxan | [g] | 3402,7 | 3252,7 | 3394,7 | 3231,7 |
| Dioxan/kg Ester | [g Dioxan/kg Ester] | 0,1 | 0,1 | 0,1 | 0,1 |
| Dioxan/kg Diethylenglykol | [g Dioxan/kg Diethylenglykol] | 0,84 | 1,34 | 0,86 | 1,37 |
| Viskosität (bei 25°C) | [mPas] | 1210 | 1850 | 1300 | 1850 |

**Beispiel A-5 (V) (Vergleich)**

In einer Apparatur nach Beispiel A-1 wurden unter Stickstoffüberschleierung bei 140°C 441 g (2,98 Mol) PSA vorgelegt und 285 g (2,69 Mol) Diethylenglykol langsam zugegeben und eine Stunde gerührt. Danach rührte man 2087 g (10,44 Mol) PEG 200 und 495 g (2,98 Mol) Terephthalsäure, sowie 78 mg Zinn-II-Chlorid-dihydrat ein, erhöhte die Temperatur auf 230 °C und destillierte bei Normaldruck über 5 Stunden Reaktionswasser ab. Danach setzte man weitere 78 mg Zinn-II-Chlorid-dihydrat zu, verringerte den Druck langsam auf zuletzt 80 mbar und vervollständigte die Reaktion unter diesem Bedingungen für weitere 15 Stunden.

Während der gesamten Umsetzung wurden Destillate in einer mit Trockeneis gekühlten Vorlage gesammelt. Man bestimmte die Menge an entstandenem 1,4-Dioxan gaschromatographisch zu 12,8 g.

**Analyse des Polyesterpolyols**

| | |
|---|---|
| Hydroxylzahl: | 232,7 mg KOH/g |
| Säurezahl: | 0,2 mg KOH/g |
| Viskosität: | 1160 mPas (25°C) |
| Menge gebildeten Polyesterpolyols: | 3135,2 g |

Menge an Dioxan bezogen auf Menge eingesetzten Diethylenglykols:

12,8 g / 0,285 kg = 44,9 g Dioxan/kg Diethylenglykol

**Beispiel A-6 (V) (Vergleich)**

Verfahrensweise wie in A-5 (V) beschrieben; Einsatzmengen siehe Tabelle 2.

**Tabelle 2:** Beispiele A-5(V) und A6(V)

| Als Katalysator wurden jeweils 50 ppm Zinn-II-chlorid-dihydrat verwendet. | | | |
|---|---|---|---|
| **Beispiel** | | **A-5 (V)** | **A-6 (V)** |
| Stufe 1 | | | |
| Phthalsäureanhydrid | [mol]<br>[g] | 2,98<br>441 | 3,26<br>542 |
| Diethylenglykol | [mol]<br>[g] | 2,69<br>285 | 2,94<br>311 |
| Stufe 2 | | | |
| PEG 200 | [mol]<br>[g] | 10,44<br>2087 | 9,20<br>1841 |
| Terephthalsäure | [mol]<br>[g] | 2,98<br>495 | 3,26<br>542 |
| | | | |
| Hydroxylzahl | [mg KOH/g] | 232,5 | 200,5 |
| Säurezahl | [mg KOH/g] | 0,2 | 0,7 |
| Max. Reaktionstemperatur | [°C] | 230 | 230 |
| Laufzeit | [Std] | 21 | 36 |
| Dioxan, gefunden | [g] | 12,8 | 12,4 |
| Masse Ester, theoret. | [g] | 3148 | 3004 |
| Masse Ester, ohne Dioxan | [g] | 3135,2 | 2991,6 |
| Dioxan/kg Ester | [g Dioxan/kg Ester] | 4,08 | 4,15 |
| Dioxan/kg Diethylenglykol | [g Dioxan/kg Diethylenglyk ol] | 44,9 | 39,9 |
| Viskosität (bei 25°C) | [mPas] | 1160 | 1870 |

Der Vergleich der Tabellen 1 und 2 zeigt, dass der Anteil des Diethylenglykols, der in Dioxan umgewandelt wird, bei vergleichbaren Rezepturen stark von der gewählten Fahrweise abhängt. Nicht erfindungsgemäße Verfahren ergeben 44,9 bzw. 39,9 g Dioxan je kg eingesetzten DEGs, wohingegen erfindungsgemäße Varianten diesbezüglich Werte von 0,84 bis 1,37 aufweisen.

**Rohstoffe für Hartschäume**:

a.) Polyester aus Bspl. A-1, A-2, A-3, A-4, A-5(V) und A-6(V)
Schäumzusatzmittel, bestehend aus b.) - f.):

b.) TCPP, Tris(1-chloro-2-propyl)-phosphat der Fa. Lanxess

c.) TEP, Triethylphosphat der Fa. Lanxess

d.) Additiv 1132 der Fa. Bayer MaterialScience

e.) PET V 657, trifunktionelles Polyetherpolyol mit einer Molmasse von ca. 660 Da. der Fa. Bayer MaterialScience AG

f.) Stabilisator Polyetherpolysiloxancopolymerisat der Fa. Evonik

g.) Aktivator: Desmorapid VP.PU 30HB13 A der Fa. BMS

h.) Desmodur VP.PU 44V70L, Polyisocyanat der Fa. Bayer MaterialScience

i.) n-Pentan, Fa. Kremer&Martin

Im Labormaßstab werden alle Rohstoffe der Hartschaumrezeptur mit Ausnahme der Polyisocyanatkomponente in einem Pappbecher eingewogen, auf 23°C temperiert, mittels eines Pendraulik-Labormischers (z.B. Type LM-34 der Fa. Pendraulik) vermischt und verflüchtigtes Treibmittel (Pentan) ggf. ergänzt. Anschließend wurde unter Rühren die Polyisocyanatkomponente (ebenfalls auf 23°C temperiert) zur Polyolmischung gegegeben, diese intensiv vermischt und das Reaktionsgemisch in Formen gegossen. Zur Bestimmung von Haftung und Störung werden Formen verwendet, die mit einer metallischen Deckschichten (Fa. Corus) ausgelegt sind. Die Schaumhärte wird bestimmt, indem man nach 2,5 Minuten mittels eines definierten Gewichtes die Eindrucktiefe in mm bestimmt. Es wurde für mindestens weitere 24 Stunden bei 23°C nachreagieren gelassen und anschließend folgende Eigenschaften bestimmt:

Brand:  BVD-Test entsprechend Schweizer Grundtest zur Ermittlung des Brennbarkeitsgrades von Baustoffen der Vereinigung kantonaler Feuerversicherungen in der Ausgabe von 1988, mit den Nachträgen von 1990, 1994,1995 und 2005. (zu beziehen bei Vereinigung kantonaler Feuerversicherungen, Bundesstr. 20, 3011 Bern, Schweiz).

Haftung:  Wird bestimmt, indem die beschäumte Deckschicht abgeschält und die benötigte Kraft dafür mittels Federwaage ermittelt wurde

Störung:  Visuelle Beurteilung auf Lunkerbildung. Es wurden "keine, wenig, mittel und starke" Lunkerbildung unterschieden

**Tabelle 3: Rezepturen für Hartschäume**

|  |  | B-1 | B-2 | B-3 | B-4 | B-5(V) | B-6(V) |
|---|---|---|---|---|---|---|---|
| Polyesterpolyol aus Bspl. A-1 | [Tle.] | 63,8 |  |  |  |  |  |
| Polyesterpolyol aus Bspl. A-2 | [Tle.] |  | 63,8 |  |  |  |  |
| Polyesterpolyol aus Bspl. A-3 | [Tle.] |  |  | 63,8 |  |  |  |
| Polyesterpolyol aus Bspl. A-4 | [Tle.] |  |  |  | 63,8 |  |  |
| Polyesterpolyol aus Bspl. A-5(V) | [Tle.] |  |  |  |  | 63,8 |  |
| Polyesterpolyol aus Bspl. A-6(V) | [Tle.] |  |  |  |  |  | 63,8 |
| Schäumzusatzmittel | [Tle.] | 36,2 | 36,2 | 36,2 | 36,2 | 36,2 | 36,2 |
| Pentan | [Tle.] | 16,2 | 15 | 15,9 | 14,6 | 15,9 | 14,8 |
| Aktivator | [Tle.] | 4,0 | 3,8 | 4,0 | 3,5 | 4,0 | 3,8 |
| Desmodur 44V70L | [Tle.] | 169 | 148 | 165 | 143 | 163 | 146 |
| Eigenschaften der Hartschäume |  |  |  |  |  |  |  |
| Brandklasse/Flammenhöhe | Klasse [mm] | Kl. 5 110120 | Kl. 5 120 | Kl. 5 127 | Kl. 5 120 | Kl. 5 110-120 | Kl. 5 120-140 |
| Haftung | [N] | 40 | 50 | 42 | 50 | 52 | 50 |
| Störung |  | mittel bis stark | wenig | wenig | wenig | wenig | mittel |

(fortgesetzt)

| Eigenschaften der Hartschäume | | | | | | | |
|---|---|---|---|---|---|---|---|
| Härte | [mm] | 5 | 8 | 4 | 8 | 4 | 7 |

Tabelle 3 zeigt, dass alle Schäume die Brandklasse 5 erreichen und in etwa gleiches Eigenschaftsniveau aufweisen.

Während jedoch B-1 bis B-4 auf erfindungsgemäßen Polyesterpolyolen basieren, die u.a. dadurch gekennzeichnet waren, dass bei deren Herstellung praktisch kein Dioxan als Nebenprodukt anfiel, basieren die Schäume B-5 (V) und B-6(V) auf Polyesterpolyolen, die diesbezüglich dramatisch schlechter abschnitten. Deswegen weisen die erfindungsgemäßen Schäume in der Gesamtsicht ihrer Herstellung wichtige Vorteile auf.

## Patentansprüche

1. Verfahren zur Herstellung von Polyesterpolyolen, wobei in einem Schritt

   a) wenigstens eine aromatische Dicarbonsäure oder ein Alkylester einer aromatischen Dicarbonsäure oder ein Anhydrid einer aromatischen Dicarbonsäure (A) und wenigstens ein $\alpha,\omega$-Diol (B) vermischt werden, wobei die $\alpha,\omega$-Diole (B) ausgewählt werden aus der Gruppe bestehend aus Ethylenglykol, Triethylenglykol, Tetraethylenglykol, Pentaethylenglykol, sowie deren höheren Homologen mit zahlenmittleren Molmassen von 150 bis 410 g/mol,
   und wobei das Molverhältnis der Komponenten (B) zu (A) im Bereich von 20 zu 1 bis 1,05 zu 1 liegt und der Gewichtsanteil der Komponenten (A) und (B) in der Summe bezogen auf das Gewicht der in Schritt c) erhaltenen Mischung im Bereich zwischen 55 bis 99 Gew.-% liegt, wobei sich ein Polyesterpolyol bildet, und
   b) zu dem in Schritt a) erhaltenen Polyesterpolyol Phthalsäureanhydrid (C) im Molverhältnis der Komponenten (C) zu der im Schritt a) zugegebenen wenigstens einen aromatischen Dicarbonsäure oder dem Alkylester der aromatischen Dicarbonsäure oder dem Anhydrid der aromatischen Dicarbonsäure (A) im Bereich von 0 zu 1 bis 2 zu 1, zugegeben wird, wobei sich ein Polyesterpolyol bildet, und
   c) zu dem in Schritt b) erhaltenen Polyesterpolyol Diethylenglykol (D) im Gewichtsanteil von 1 bis 35 Gew.-%, bezogen auf das Gewicht der Mischung, zugesetzt wird, wobei sich ein Polyesterpolyol bildet,

   wobei das in Schritt b) erhaltene Polyesterpolyol eine höhere Molmasse als das in Schritt c) erhaltene Polyesterpolyol aufweist.

2. Verfahren nach Anspruch 1, **dadurch gekennzeichnet, dass** die aromatische Dicarbonsäure (A) ausgewählt wird aus der Gruppe bestehend aus Phthalsäure, Terephthalsäure, Isophthalsäure oder Gemischen daraus.

3. Verfahren nach Anspruch 1 oder 2, **dadurch gekennzeichnet, dass** das Molverhältnis der Komponenten (B) zu (A) im Bereich von 1,1 zu 1,0 bis 10,0 zu 1,0 liegt.

4. Verfahren nach einem der Ansprüche 1 bis 3, **dadurch gekennzeichnet, dass** die Molmasse des aus Schritt a) erhaltenen Polyesterpolyols im Bereich zwischen 4000 und 200, bevorzugt im Bereich zwischen 3000 und 250, g/mol liegt..

5. Verfahren nach einem der Ansprüche 1 bis 4, **dadurch gekennzeichnet, dass** die OH-Zahl des aus Schritt a) erhaltenen Polyesterpolyols im Bereich zwischen 28 und 560 KOH/kg liegt.

6. Verfahren nach einem der Ansprüche 1 bis 5 **dadurch gekennzeichnet, dass** die Molmasse des aus Schritt b) erhaltenen Polyesterpolyols im Bereich zwischen 4500 und 600, bevorzugt im Bereich zwischen 4000 und 700, g/mol liegt.

7. Verfahren nach einem der Ansprüche 1 bis 6, **dadurch gekennzeichnet, dass** die OH-Zahl des aus Schritt b) erhaltenen Polyesterpolyols im Bereich zwischen 25 - 190 g KOH/kg liegt.

8. Verfahren nach einem der Ansprüche 1 bis 7, **dadurch gekennzeichnet, dass** die Viskosität des aus Schritt b) erhaltenen Polyesterpolyols bei einer Temperatur von 25 °C im Bereich zwischen 400 und 20000 mPas, bevorzugt im Bereich zwischen 450 und 15000 mPas, liegt.

**9.** Verfahren nach einem der Ansprüche 1 bis 8, **dadurch gekennzeichnet, dass** der Gewichtsanteil der Komponenten (A) und (B) in der Summe bezogen auf das Gewicht der Mischung im Bereich zwischen 60 und 90 Gew.-%, liegt.

**10.** Verfahren zur Herstellung eines Polyurethan-Schaumstoffs, der ggf. Polyisocyanuratgruppen enthalten kann, bei dem

a) ein Polyesterpolyol nach einem Verfahren gemäß einem der Ansprüche 1 bis 9 hergestellt wird und das so erhaltene Polyesterpolyol anschließend
b) mit wenigstens einer polyisocyanathaltigen Komponente,
c) in Gegenwart eines oder mehrerer Treibmittel,
d) in Gegenwart eines oder mehrerer Katalysatoren und
e) ggf. in Gegenwart eines oder mehrerer Flammschutzmittel und ggf. in Gegenwart weiterer Hilfs- und Zusatzstoffe und
f) ggf. mit wenigstens einer Verbindung mit mindestens zwei gegenüber Isocyanaten reaktiven Gruppen, die sich von dem Polyesterpolyol aus Schritt a) unterscheidet, umgesetzt wird.

**Claims**

**1.** A process for producing polyester polyols, wherein in one step

a) at least one aromatic dicarboxylic acid or alkyl ester of an aromatic dicarboxylic acid or anhydride of an aromatic dicarboxylic acid (A) and at least one $\alpha,\omega$-diol (B) are mixed, wherein the $\alpha,\omega$-diols (B) are selected from the group consisting of ethylene glycol, triethylene glycol, tetraethylene glycol, pentaethylene glycol and the higher homologs thereof with number-average molecular weights of 150 to 410 g/mol, and wherein the molar ratio of components (B) to (A) is in the range of 20:1 to 1.05:1 and the proportion by weight of components (A) and (B) in total, based on the weight of the mixture obtained in step c), is in the range of between 55 and 99 wt.%, with the formation of a polyester polyol, and
b) to the polyester polyol obtained in step a), phthalic anhydride (C) is added in a molar ratio of components (C) to the at least one aromatic dicarboxylic acid or alkyl ester of the aromatic dicarboxylic acid or anhydride of the aromatic dicarboxylic acid (A) added in step a) in the range of 0:1 to 2:1, with the formation of a polyester polyol, and
c) to the polyester polyol obtained in step b), diethylene glycol (D) is added in a proportion by weight of 1 to 35 wt.%, based on the weight of the mixture, with the formation of a polyester polyol,

wherein the polyester polyol obtained in step b) has a higher molecular weight than the polyester polyol obtained in step c).

**2.** The process according to claim 1, **characterised in that** the aromatic dicarboxylic acid (A) is selected from the group consisting of phthalic acid, terephthalic acid, isophthalic acid or mixtures thereof.

**3.** The process according to claim 1 or 2, **characterised in that** the molar ratio of components (B):(A) is in the range of 1.1:1.0 to 10.0:1.0.

**4.** The process according to one of claims 1 to 3, **characterised in that** the molecular weight of the polyester polyol obtained from step a) is in the range of between 4000 and 200, preferably in the range of between 3000 and 250 g/mol.

**5.** The process according to one of claims 1 to 4, **characterised in that** the OH number of the polyester polyol obtained from step a) is in the range of between 28 and 560 g KOH/kg.

**6.** The process according to one of claims 1 to 5, **characterised in that** the molecular weight of the polyester polyol obtained from step b) is in the range of between 4500 and 600, preferably in the range of between 4000 and 700 g/mol.

**7.** The process according to one of claims 1 to 6, **characterised in that** the OH number of the polyester polyol obtained from step b) is in the range of between 25 and 190 g KOH/kg.

8. The process according to one of claims 1 to 7, **characterised in that** the viscosity of the polyester polyol obtained from step b) at a temperature of 25°C is in the range of between 400 and 20000 mPas, preferably in the range of between 450 and 15000 mPas.

9. The process according to one of claims 1 to 8, **characterised in that** the proportion by weight of components (A) and (B) in total, based on the weight of the mixture, is in the range of between 60 and 90 wt.%.

10. A process for producing a polyurethane foam, which may optionally contain polyisocyanurate groups, in which

   a) a polyester polyol is produced by a process according to claims 1 to 9 and the polyester polyol thus obtained is then reacted
   b) with at least one polyisocyanate-containing component,
   c) in the presence of one or more blowing agents,
   d) in the presence of one or more catalysts and
   e) optionally in the presence of one or more flame retardants and optionally in the presence of other auxiliary substances and additives and
   f) optionally with at least one compound having at least two isocyanate-reactive groups, which differs from the polyester polyol from step a).

## Revendications

1. Procédé pour la préparation de polyesterpolyols, dans lequel, dans une étape

   a) on mélange au moins un acide dicarboxylique aromatique ou un ester alkylique d'un acide dicarboxylique aromatique ou un anhydride d'un acide dicarboxylique aromatique (A) et au moins un $\alpha,\omega$-diol (B), les $\alpha,\omega$-diols (B) étant choisis dans le groupe constitué par l'éthylèneglycol, le triéthylèneglycol, le tétraéthylèneglycol, le pentaéthylèneglycol, ainsi que leurs homologues supérieurs présentant des masses molaires numériques moyennes de 150 à 410 g/mole,
   et le rapport molaire des composants (B) à (A) se situant dans la plage de 20:1 à 1,05:1 et la somme des proportions pondérales des composants (A) et (B) par rapport au poids du mélange obtenu dans l'étape c) se situant dans la plage entre 55 à 99% en poids, un polyesterpolyol se formant, et
   b) on ajoute au polyesterpolyol obtenu dans l'étape a) de l'anhydride de l'acide phtalique (C) dans un rapport molaire du composant (C) à l'acide dicarboxylique aromatique ou à l'ester alkylique de l'acide dicarboxylique aromatique ou à l'anhydride de l'acide dicarboxylique aromatique (A) ajouté dans l'étape a) dans la plage de 0:1 à 2:1, un polyesterpolyol se formant, et
   c) on ajoute au polyesterpolyol obtenu dans l'étape b) du diéthylèneglycol (D) dans une proportion pondérale de 1 à 35% en poids, par rapport au poids du mélange, un polyesterpolyol se formant,

   le polyesterpolyol obtenu dans l'étape b) présentant une masse molaire supérieure à celle du polyesterpolyol obtenu dans l'étape c).

2. Procédé selon la revendication 1, **caractérisé en ce que** l'acide dicarboxylique aromatique (A) est choisi dans le groupe constitué par l'acide phtalique, l'acide téréphtalique, l'acide isophtalique ou leurs mélanges.

3. Procédé selon la revendication 1 ou 2, **caractérisé en ce que** le rapport molaire des composants (B) à (A) se situe dans la plage de 1,1:1,0 à 10,0:1,0.

4. Procédé selon l'une quelconque des revendications 1 à 3, **caractérisé en ce que** la masse molaire du polyesterpolyol obtenu par l'étape a) se situe dans la plage entre 4000 et 200, de préférence dans la plage entre 3000 et 250 g/mole.

5. Procédé selon l'une quelconque des revendications 1 à 4, **caractérisé en ce que** l'indice OH du polyesterpolyol obtenu par l'étape a) se situe dans la plage entre 28 et 560 g de KOH/kg.

6. Procédé selon l'une quelconque des revendications 1 à 5, **caractérisé en ce que** la masse molaire du polyesterpolyol obtenu par l'étape b) se situe dans la plage entre 4500 et 600, de préférence dans la plage entre 4000 et 700 g/mole.

7. Procédé selon l'une quelconque des revendications 1 à 6, **caractérisé en ce que** l'indice OH du polyesterpolyol obtenu par l'étape b) se situe dans la plage entre 25 et 190 g de KOH/kg.

8. Procédé selon l'une quelconque des revendications 1 à 7, **caractérisé en ce que** la viscosité du polyesterpolyol obtenu par l'étape b) à une température de 25°C se situe dans la plage entre 400 et 20 000 mPa.s, de préférence dans la plage entre 450 et 15 000 mPa.s.

9. Procédé selon l'une quelconque des revendications 1 à 8, **caractérisé en ce que** la somme des proportions pondérales des composants (A) et (B) par rapport au poids du mélange se situe dans la plage entre 60 et 90% en poids.

10. Procédé pour la préparation d'une mousse de polyuréthane qui peut le cas échéant contenir des groupes polyisocyanate, dans lequel

a) on prépare un polyesterpolyol selon un procédé selon l'une quelconque des revendications 1 à 9 et le polyesterpolyol ainsi obtenu est ensuite transformé
b) avec au moins un composant contenant du polyisocyanate,
c) en présence d'un ou de plusieurs agents gonflants,
d) en présence d'un ou de plusieurs catalyseurs et
e) le cas échéant en présence d'un ou de plusieurs agents ignifuges et le cas échéant en présence d'autres adjuvants et additifs et
f) le cas échéant avec au moins un composé présentant au moins deux groupes réactifs par rapport aux isocyanates, qui se distingue du polyesterpolyol de l'étape a).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Methoden der organischen Chemie. **HOUBEN-WEYL.** Makromolekulare Stoffe. Thieme Verlag, 1963, vol. 14/2, 1-47
- **P.J.FLORY.** Principles of Polymer-Chemistry. Cornell University Press, 1953, 317
- Polyurethanes: Chemistry and Technology, Part I. **J.H. SAUNDERS ; H.T. FRISCH.** Chemistry, Interscience. John Wiley and Sons, 1962, 45
- Kunststoffhandbuch. Polyurethane. Carl Hanser Verlag, 1966, vol. VII
- Vereinigung kantonaler Feuerversicherungen. *Bundesstr.,* vol. 20, 3011